# NEUE EUROPÄISCHE PATENTSCHRIFT

(11) **EP 2 363 307 B2**
(45) Veröffentlichungstag und Bekanntmachung des Hinweises auf die Entscheidung über den Einspruch: **26.02.2020**
(45) Hinweis auf die Patenterteilung: 13.08.2014
(21) Anmeldenummer: 11001380.2
(22) Anmeldetag: 19.02.2011
(51) Int. Cl.: B60D 1/06, B60D 1/24

(54) **Anhängekopplung mit einem Kraftsensor**
Trailer coupling with a force sensor
Couplage d'une remorque avec un capteur de force

(30) Priorität: 02.03.2010 DE 102010009986
(43) Veröffentlichungstag der Anmeldung: 07.09.2011
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE)
(74) Vertreter: Patentanwälte Bregenzer und Reule Partnerschaftsgesellschaft mbB

(56) Entgegenhaltungen:
- DE-A1- 3 725 917
- DE-A1- 10 211 572
- DE-A1- 10 334 000
- DE-U1-202008 011 665
- US-A- 4 319 766
- US-B1- 6 722 684

## Beschreibung

Die Erfindung betrifft eine Anhängekupplung für ein zugfahrzeug, insbesondere ein Personen-Kraftfahrzeug, zum Anhängen eines Anhängers an das Zugfahrzeug, mit einem insbesondere außenseitig kugelförmigen Kuppelkörper, auf den eine Kupplungsaufnahme einer Anhänger-Kupplung des Anhängers aufsetzbar ist, gemäß dem Oberbegriff des Anspruchs 1.

Eine derartige Anhängekupplung ist beispielsweise aus US 6 722 684 B1 bekannt.

Eine weitere Anhängekupplung ist beispielsweise aus DE 10 2008 045 695 A1 bekannt. Der Kugelkopf ist an einem Kugelträger drehbar gelagert, beispielsweise mittels eines Rollenlagers. Dadurch ist ein Schwenken des Anhängers um eine Hochachse möglich.

Bei der bekannten Anhängekupplung ist der Kugelkopf in der Art eines Kugelkopfmantels drehbar zu dem armartigen Kuppelkörperträger, mithin also einem Kupplungsarm, gelagert. Auf diese Weise kann ein Winkelsignal vom Kugelkopf zu einem Winkelsensor übertragen werden, der am Fuß eines mit dem Kugelkopf oder Kuppelkörper verbundenen Übertragungsstabes angeordnet ist.

Mithin ist es also bekannt, Sensorik zur Winkelerkennung bei Anhängekupplungen zu verwenden, so dass eine Winkelstellung des gezogenen Fahrzeuges (des Anhängers) bezüglich des Zugfahrzeuges ermittelbar ist. Das Winkelsignal wird beispielsweise von einem Fahrstabilisierungsprogramm des Zugfahrzeuges ausgewertet, um das Gespann zu stabilisieren.

Allerdings haben auch noch andere Faktoren, beispielsweise die Stützlast, das Gesamtgewicht des Anhängers, die Zugkraft am Zughaken bzw. der Anhängekupplung und dergleichen mehr Einfluss auf die Fahrstabilität bzw. Gespannstabilität.

Es ist daher die Aufgabe der vorliegenden Erfindung, eine Anhängekupplung bereitzustellen, die Mittel enthält, um eine Stabilität eines Gespanns aus Zugfahrzeug und Anhänger zu verbessern.

Zur Lösung der Aufgabe ist eine Anhängekupplung gemäß der technischen Lehre des Anspruchs 1 vorgesehen.

Mit Hilfe des Kraftsensors (es können auch mehrere Kraftsensoren vorgesehen sein) kann beispielsweise die Stützlast und/oder die Zuglast und/oder eine Schub- oder Bremskraft und/oder eine Querlast oder -kraft, die im Betrieb auf die Anhängekupplung wirken, erfasst werden.

Während der Kuppelkörperträger verhältnismäßig unelastisch und starr ist, d.h. eine hohe Steifigkeit aufweist, ist zwischen dem Kuppelkörper und dem Kuppelkörperträger eine Beweglichkeit und/oder eine Elastizität vorhanden, beispielsweise eine Messelastizität von ca. 10 kN/0,1 mm. Diese Beweglichkeit und/oder Elastizität zwischen dem Kuppelkörper und dem Kuppelkörperträger wird erfindungsgemäß zur Kraftmessung herangezogen. Beispielsweise ist der Kuppelkörperträger in sich 10 bis 100 mal steifer als die zur Kraftmessung herangezogene Verbindung zwischen dem Kuppelkörper und dem Kuppelkörperträger.

Eine Ausführungsform der Erfindung sieht z.B. vor, dass die Stützlast zumindest angezeigt wird, beispielsweise an einer Anzeige im Innenraum des Zugfahrzeuges. Beispielsweise kann die Anhängekupplung ein Display aufweisen, das beispielsweise vor Ort, das heißt im Bereich der Anhängekupplung, beispielsweise im Außenbereich des Zugfahrzeugs oder innerhalb eines Gepäckabteils, die jeweilige Stützlast anzeigt. Der Fahrer kann dann beispielsweise den Anhänger entsprechend austarieren, so dass eine vorgeschriebene Stützlast eingehalten wird. Dabei ist zu bemerken, dass nicht nur eine Überschreitung der Stützlast, sondern auch Unterschreitung der Regel-Stützlast zu einer Instabilität des Gespanns führen kann. Wenn also die Stützlast zu gering ist, neigt das Gespann dazu, früher zu schlingern als bei normalen Stützlasten, so dass das Zugfahrzeug beispielsweise am Heck früher ausbricht. Das Gespann wird instabil.

Weiterhin ist es zweckmäßig, wenn die Anhängekupplung Übertragungsmittel und/oder elektrische Kopplungsmittel hat, um ein Kraftsignal des mindestens einen Kraftsensors an das Bordnetz des Zugfahrzeuges zu übertragen. Beispielsweise kann ein Display und/oder eine sonstige Anzeige, das heißt auch beispielsweise eine haptische und/oder akustische Anzeige, am oder im Zugfahrzeug vorgesehen sein, vorzugsweise im Armaturenbereich desselben, um die jeweilige Stützlast anzuzeigen oder zumindest bei Über- oder Unterschreitung ein Warnsignal auszugeben. Es versteht sich, dass beispielsweise auch die Kombination eines optischen und akustischen Anzeigesignals für das Kraftsignal des mindestens einen Kraftsensors zweckmäßig ist.

Weiterhin ist es vorteilhaft, wenn die Anhängekupplung eine Busschnittstelle oder eine sonstige elektrische Schnittstelle zur Ankopplung an das Bordnetz des Zugfahrzeuges aufweist, um das Kraftsignal des mindestens einen Kraftsensors an das Zugfahrzeug bzw. dessen Bordnetz zu übertragen. Die Busschnittstelle ist beispielsweise eine CAN-Schnittstelle (Controller Area Network), eine LIN-Schnittstelle (Local Interconnect Network) oder dergleichen.

Ein erfindungsgemäßer Ansatz ist es, dass der Kuppelkörper, beispielsweise eine Kugel oder ein Kugelmantel, bezüglich des tragenden Bauteiles, nämlich des Kuppelkörperträgers, eine gewisse Beweglichkeit aufweist. Diese Beweglichkeit kann beispielsweise eine Biegbarkeit und/oder eine gewisse Verschieblichkeit und/oder Verdrehbarkeit sein, beispielsweise eine axiale Verschieblichkeit.

Eine axiale Verschieblichkeit in vertikaler Richtung (bezogen auf den Betrieb der Anhängekupplung) kann beispielsweise zu einer Stützkraftmessung geeignet sein.

Eine axiale Verschieblichkeit in horizontaler Richtung (ebenfalls beim Betrieb der Anhängekupplung), z.B. einer X-Richtung (entsprechend einer Fahrzeuglängsachse) und/oder Y-Richtung (entsprechend einer Fahrzeugquerachse), kann beispielsweise zu einer Zugkraftmessung, einer Brems- oder Schubkraftmessung oder einer Querkraftmessung genutzt werden.

Der Kuppelkörper kann direkt, gegebenenfalls unter Zwischenschaltung eines Lagers, z.B. eines Gleit- oder Wälzlagers, am Kuppelkörperträger gelagert sein. Vorteilhaft ist es auch möglich, dass der Kuppelkörper an einem Lager- oder Trägerkörper, z.B. einem Stangenteil oder dergleichen, angeordnet ist, wobei der Lagerkörper an dem Kuppelkörperträger gelagert ist. Der mindestens eine Kraftsensor kann an dem Lager- oder Trägerkörper angeordnet sein und/oder durch den Lager- oder Trägerkörper betätigbar sein.

Es versteht sich, dass der Kraftsensor oder die Kraftsensoren vorteilhaft bidirektional arbeiten, das heißt dass sie nicht nur eine positive Stützlast, sondern auch eine negative Stützlast sowie bezüglich einer Zugkraft oder Zuglast auch hier eine positive oder negative Zuglast (quasi also einer Schubkraft) messen können. Wenn also der Anhänger gezogen wird, gibt der als Zugkraftsensor ausgestaltete Kraftsensor ein positives Kraftsignal aus, während beim Auflaufen des Anhängers ein negatives Kraftsignal auftritt.

Es versteht sich, dass der jeweilige Kraftsensor entsprechend zur Messung einer beim Betrieb der Anhängekupplung im Wesentlichen vertikalen oder auch horizontalen Kraftkomponente ausgestaltet ist. Somit kann also die Kraftsensorik bei der erfindungsgemäßen Anhängekupplung sowohl eine Stützlastmessung als auch eine Zugkraftmessung durchführen.

Der Kuppelkörperträger ist zweckmäßigerweise an einem Kupplungsarm angeordnet oder als Kupplungsarm ausgestaltet. In der Regel steht also der Kuppelkörperträger armartig nach hinten vor das Zugfahrzeug vor.

An dieser Stelle sei bemerkt, dass der Kuppelkörperträger fest am Zugfahrzeug montiert sein kann oder auch an einem Lager der Gestalt, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Zugfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Zugfahrzeug vor, beispielsweise nach hinten vor einen Stoßfänger, so dass der Anhänger angehängt werden kann.

An dieser Stelle sei ferner bemerkt, dass der Kuppelkörper zwar bei derzeit üblichen Zugkugelkupplungen vorzugsweise kugelig ausgestaltet sein kann. Es ist aber auch möglich, dass ein form-oder drehschlüssiger Halt des Anhängers am Zugfahrzeug gewünscht ist, so dass der Kuppelkörper beispielsweise eine polygonale oder eine sonstige, eine Drehfestigkeit ermöglichende Außenkontur aufweist. Es versteht sich, dass der Kuppelkörper auch eine Aufnahme aufweisen könnte, in die ein entsprechendes Gegenstück des Anhängers eingesteckt werden kann, zweckmäßigerweise formschlüssig.

Die bevorzugte Ausgestaltung des Kuppelkörpers als kugeliges Glied, insbesondere als Kugelmantel, ermöglicht jedoch die Ankupplung einer üblichen, normgerechten Zugkugelkupplung an die erfindungsgemäße Anhängekupplung, wobei dann erfindungsgemäß eine Kraftmessung möglich ist.

Eine bevorzugte Ausführungsform der Erfindung sieht vor, dass der Kuppelkörper an dem Kuppelkörperträger mittels eines Drehlagers, vorzugsweise mehrerer Drehlager, also einer Drehlageranordnung mit mindestens einem Drehlager, drehbar gelagert ist. Das Drehlager kann beispielsweise ein Wälzlager sein. Insbesondere ist es zweckmäßig, wenn der Kuppelkörper bezüglich des Kuppelkörperträgers um eine beim Betrieb des Zugfahrzeugs vertikale Achse bzw. Fahrzeughochachse schwenkbar ist.

Diese Maßnahme ist insbesondere dann zweckmäßig, wenn die erfindungsgemäße Anhängekupplung auch eine Winkelmessung ermöglicht, das heißt dass ein Winkelsensor vorgesehen ist, der eine Winkelstellung des Kuppelkörpers relativ zum Kuppelkörperträger erfasst und ein Winkelsignal erzeugt. Das Winkelsignal kann beispielsweise über die vorgenannte Bordschnittstelle oder Busschnittstelle an das Zugfahrzeug übertragen werden, das seinerseits das Winkelsignal zur Gespannstabilisierung auswertet.

Bevorzugt hat der Kuppelkörperträger einen Tragvorsprung zum Tragen des Kuppelkörpers. Der Tragvorsprung greift in eine Aufnahme des Kuppelkörpers ein. In der Aufnahme ist ein Drehlager und sind mehrere Drehlager angeordnet, die den Kuppelkörper bezüglich des Kuppelkörperträgers drehbar lagern. Beispielsweise kann ein Drehlager an einem Außenumfang des Tragvorsprunges vorgesehen sein, der dementsprechend an einem Innenumfang der Aufnahme des Kuppelkörpers anliegt. Aber auch eine stirnseitige Lagerung oder eine Kombination von stirnseitiger Lagerung und Umfangslagerung ist möglich.

Die Anordnung von Kraftsensoren bei der erfindungsgemäßen Anhängekupplung kann an verschiedenen Stellen erfolgen:
So ist beispielsweise vorgesehen, dass das mindestens eine Drehlager einen oder mehrere Kraftsensoren aufweist. Dies ist beispielsweise bei Gleit- oder Wälzlagern möglich, bei denen die Kraftsensorik zwischen deren Innenring und Außenring oder auch am Außenumfang und/oder einer Außenstirnseite möglich ist. Auch trocken laufende Gleitlager können mit einer integrierten Sensorik ausgestaltet sein.

Es ist aber auch möglich, dass man einen oder mehrere Kraftsensoren in einer Drehlageraufnahme für das jeweilige Drehlager anordnet. So ist es vorteilhaft, wenn der Kraftsensor oder eine Kraftsensoranordnung beispielsweise etwa die Größe, insbesondere den Stirnseiten- oder Außenumfangsdurchmesser, eines jeweiligen Lagers aufweist. Der oder die Kraftsensoren sind beispielsweise zwischen dem Drehlager und der Drehlageraufnahme angeordnet. Hier ist beispielsweise eine stirnseitige Anordnung des Kraftsensors möglich oder auch eine umfangsseitige Anordnung.

Das Drehlager kann, wie gesagt, ein Wälzlager sein, z.B. ein Kugellager, Rollenlager oder Nadellager, aber auch ein Gleitlager oder ein Gleitlager.

Erfindungsgemäß ist vorgesehen, dass eine Winkelsensorik vorhanden ist, mit der eine Winkel-stellung der Kupplungsaufnahme relativ zu dem Kuppelkörperträger erfassbar ist. Der Winkelsensor kann beispielsweise eine Winkelstellung des bezüglich des Kuppelkörperträgers drehbaren Kuppelkörpers erfassen. Es ist aber auch möglich, dass der Kuppelkörper bezogen auf eine beim Betrieb vertikale Drehachse drehfest an dem Kuppelkörperträger angeordnet ist und vor den Kuppelkörper vorsteht. Wenn nun die Kupplungsaufnahme auf den Kuppelkörper aufgesetzt wird, betätigt sie den Mitnehmer, der seinerseits wiederum mit dem Winkelsensor zusammenwirkt. Wenn also dann der Anhänger relativ zum Zugfahrzeug schwenkt, was insbesondere bei einer kugeligen Ausgestaltung des Kuppelkörpers möglich ist, wird der Mitnehmer verdreht, so dass der Winkelsensor die Drehstellung erfassen kann. Beim Ausführungsbeispiel ist jedoch die andere Ausgestaltung getroffen, bei der der Kuppelkörper drehbar bezüglich des Kuppelkörperträgers ist.

Nun ist es möglich, dass der Kuppelkörper beispielsweise mittels eines Drehlagers und/oder eines Schiebelagers am Kuppelkörperträger drehbar und/oder verschieblich gelagert ist.

Es ist aber auch möglich, dass zwischen dem Kuppelkörperträger und dem Kuppelkörper ein Trägerkörper angeordnet ist, der bezüglich des Kuppelkörperträgers zumindest abschnittsweise biegbar oder beweglich oder elastisch verformbar ist. Ein Trägerkörper, der nachfolgend beim Ausführungsbeispiel näher erläutert wird, ist beispielsweise biegbar, hat jedoch eine relativ hohe Biegesteifigkeit von 10.000 Newton pro 0,1 Millimeter. Somit ist also der Trägerkörper eigentlich im Wesentlichen biegesteif, hat jedoch elastische oder federnde Eigenschaften. Auf diesem Wege ist eine zur erfindungsgemäßen Kraftmessung geeignete Beweglichkeit bzw. Elastizität möglich.

Der Trägerkörper stützt sich beispielsweise auf den mindestens einen Kraftsensor ab. Zum Beispiel ist der Kraftsensor als Kraftmessdose ausgestaltet oder in einer solchen angeordnet. Nebenbei bemerkt, kann sich auch eines der vorgenannten Drehlager auf einer Kraftmessdose abstützen.

Der Trägerkörper kann auch mindestens einen Kraftsensor aufweisen, z.B. einen Dehnungsmessstreifen und/oder ein piezoelektrisches Messelement.

Es ist aber auch möglich, dass der Drehkörper bezüglich des Kuppelkörperträgers drehbar gelagert und mit dem Kuppelkörper drehfest verbunden ist. Wenn dann also der Kuppelkörper dreht, beispielsweise durch Einwirkung der aufliegenden Kupplungsaufnahme, überträgt der Trägerkörper die Winkelstellung des Kuppelkörpers relativ zu dem Kuppelkörperträger auf dem Winkelsensor. Der Trägerkörper bildet hier also eine Art Übertragungsglied.

Bevorzugt ist eine geschützte Anordnung des mindestens einen Kraftsensors. Beispielsweise ist der Kraftsensor in einem Innenraum des Kuppelkörpers und/oder des Kuppelkörperträgers angeordnet.

Weiterhin kann der Kraftsensor eine ringförmige Gestalt aufweisen oder Bestandteil einer ringförmigen Kraftsensoranordnung sein. Ein den Kuppelkörper tragendes Bauteil, z.B. ein insbesondere stabförmiger Stützkörper oder ein Drehlager, ist dann in einem Innenraum des Kraftsensors oder der Kraftsensoranordnung angeordnet. Beispielsweise hat der Kraftsensor oder die Kraftsensoranordnung die Gestalt einer Aufnahmehülse, in deren Innenraum das auf den Kraftsensor bzw. die Kraftsensoranordnung einwirkende Element angeordnet ist. Es ist z.B. im Rahmen der Erfindung, wenn der vorgenannte Trägerkörper, der zweckmäßigerweise stabförmig ist, in einem solchen Innenraum der Aufnahmehülse angeordnet ist.

Für den jeweiligen Kraftsensor kommen verschiedene Systeme in Frage. Beispielsweise kann man Dehnungsmessstreifen vorsehen. Aber auch ein piezoelektrisches Messprinzip ist ohne weiteres möglich. Weiterhin sind magnetoresistive Sensoren oder magnetostriktive Sensoren möglich, mit denen auch kleinste Verschiebungen oder Kraftänderungen messbar sind, die beispielsweise durch Biegungen oder Belastungen entstehen.

Eine bevorzugte Ausführungsform sieht vor, dass der Winkelsensor und der mindestens eine Kraftsensor in ein und derselben Sensoranordnung angeordnet sind. Somit ist es möglich, dass sowohl das Winkelsignal als auch das Kraftsignal an derselben Stelle erfasst werden. Ankopplungsmittel, die die Kraftsignale und Winkelsignale erzeugen, sind nur einmal erforderlich, beispielsweise eine Schnittstelle für ein Bordnetz des Zugfahrzeuges.

Nachfolgend wird ein Ausführungsbeispiel der Erfindung anhand der Zeichnung erläutert. Es zeigen:
- Figur 1: eine erfindungsgemäße Anhängekupplung mit einer angekuppelten Zugkugelkupplung in seitlichem Querschnitt,
- Figur 2: die Querschnittsdarstellung der Anhängekupplung gemäß Figur 1 in vergrößerter Darstellung und
- Figur 3: eine Explosionsdarstellung der Anhängekupplung gemäß Figuren 1, 2.

Eine Anhängekupplung 10 ist an einem Zugfahrzeug 12 befestigt, beispielsweise einem Querträger. An einem Kuppelkörperträger 13 der Anhängekupplung 10 sind hierfür beispielsweise Bohrungen 14 vorgesehen, wobei eine bewegliche Lagerung, insbesondere eine Dreh- und/oder Schiebelagerung, des Kuppelkörperträgers 13 bezüglich des Zugfahrzeugs 12 auch möglich sind, z.B. anhand einer geeigneten Lagereinrichtung. Der Kuppelkörperträger 13 trägt an seinem freien Ende einen Kuppelkörper 15, der vorliegend eine kugelige Gestalt hat. Dementsprechend kann eine Zugkugelkupplung 16 eines Anhängers 17 mit ihrer Kupplungsaufnahme 18 auf den kugeligen Kuppelkörper 15 aufgesetzt werden.

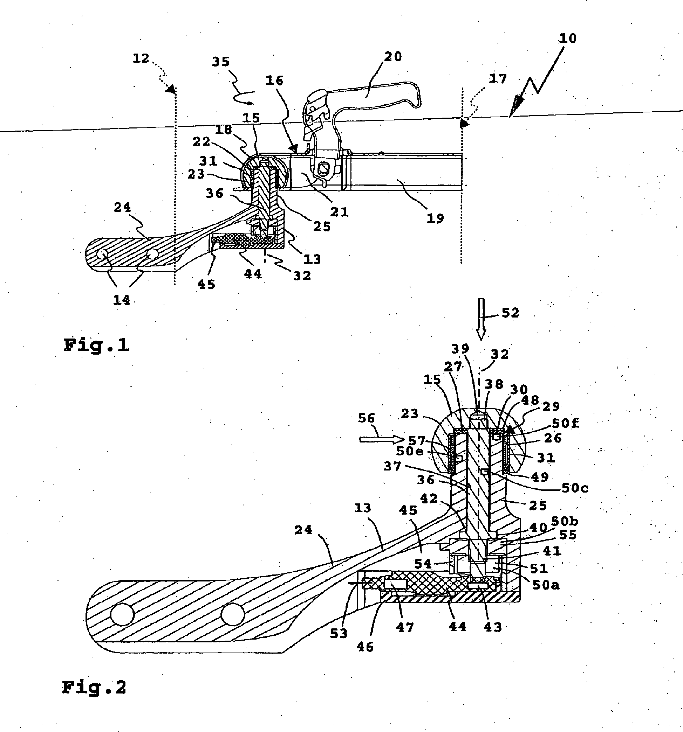

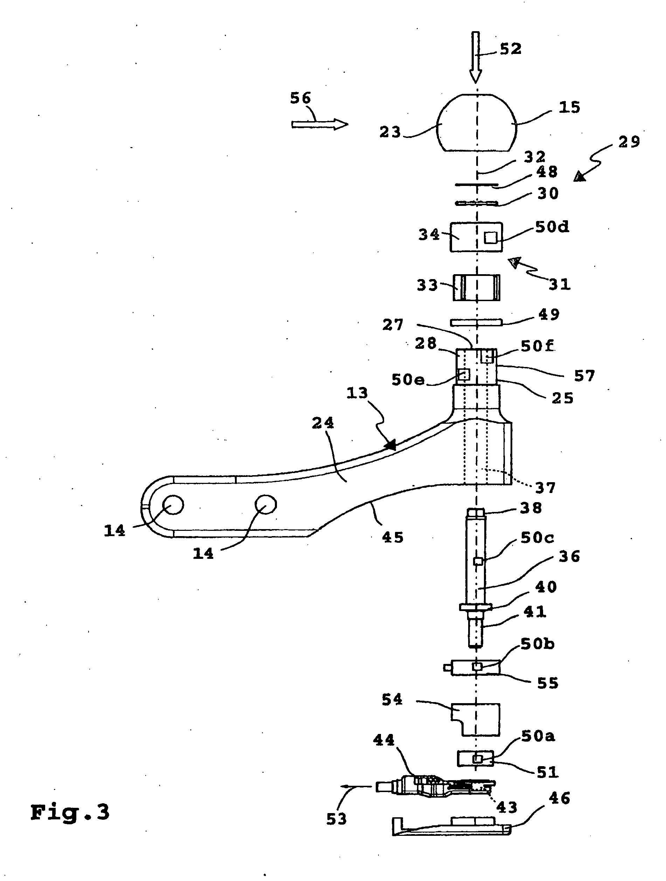

Die Zugkugelkupplung 16 ist an einem freien Ende einer Deichsel 19 des Anhängers 17 angeordnet und mittels eines Schwenkhebels 20 betätigbar. Wenn der Schwenkhebel 20 in die Schließstellung, das heißt in Richtung der Deichsel 19 bewegt wird, betätigt er in an sich bekannter Weise einen Haltebacken 21 in Richtung einer Kugeloberfläche 23 des Kuppelkörpers 15. Somit liegt also eine Innenfläche 22 der Kupplungsaufnahme 18 im Wesentlichen formschlüssig an der Kugeloberfläche 23 an. Wenn nunmehr der Kuppelkörper 15 feststehend bezüglich des Kuppelkörperträgers 13 wäre, zumindest drehfest, würde die Kupplungsaufnahme 18 an der Kugeloberfläche 23 außenseitig entlanggleiten. Eine solche Anordnung ist jedoch bei der Anhängekupplung gemäß Figuren 1 bis 3 nicht getroffen. Vielmehr ist der Kuppelkörper 15 bezüglich des Kuppelkörperträgers 13 drehbar gelagert.

Der Kuppelkörperträger 13 hat eine armartige Gestalt und besteht aus einem Tragarm 24, vor den nach oben hin ein Tragvorsprung 25 absteht. Der Tragvorsprung 25 greift in eine Aufnahme 26 des Kuppelkörpers 15 ein. Dort ist eine Drehlageranordnung 29 mit einem Stirn-Drehlager 30 sowie einem Umfangsdrehlager 31 angeordnet, so dass der Kuppelkörper 15 um eine Drehachse 32 bezüglich des Kuppelkörperträgers 13 drehbar gelagert ist. Das Stirn-Drehlager 30 ist zwischen einer Stirnseite des Tragvorsprungs 25 und einer Bodenseite der Aufnahme 26 angeordnet. Das Stirn-Drehlager 30 ist beispielsweise ein Rollenlager oder ein Gleitlager.

Das Umfangsdrehlager 31 hingegen ist mit seinem Innenring 33 drehfest am Außenumfang des Tragvorsprungs 25 befestigt, mit seinem Außenring 34 drehfest am Innenumfang der Aufnahme 26. Somit kann also der Kuppelkörper 15 um die Drehachse 32 drehen, was durch einen Pfeil 35 angedeutet ist. Das Stirn-Drehlager 30 nimmt entlang der Achsrichtung der Drehachse 32 auftretende Kräfte auf. Das Umfangsdrehlager 31 hingegen nimmt quer zur Drehachse 32 wirkende Kräfte, beispielsweise Zug- und Schubkräfte, die auf und vom Anhänger 17 auf die Anhängekupplung 10 wirken, auf.

Somit nimmt also die Drehlageranordnung 29 im Wesentlichen horizontal wirkende Kräfte auf sowie auch nach vertikal unten wirkende Kräfte. Wenn jedoch der Anhänger 17 sozusagen entlang der Drehachse 32 am Kuppelkörper 15 zieht, beispielsweise beim Überfahren von Bodenwellen, wird der Kuppelkörper 15 durch einen Trägerkörper 36 abgestützt. Der Trägerkörper 36 hat eine stabförmige Gestalt und ist in einer Lageraufnahme, z.B. einer Bohrung 37, drehbar gelagert. Der Trägerkörper 36 ist drehfest mit dem Kuppelkörper 15 verbunden. Beispielsweise greift ein Haltevorsprung 38 in eine Aufnahme 39 ein und ist dort drehfest gehalten. Beispielsweise ist der Haltevorsprung 38 in die Aufnahme 39 eingepresst und/oder eingeschraubt und/oder eingeklebt.

An dem dem Haltevorsprung 38 entgegengesetzten Endbereich hat der Trägerkörper 36 einen frei vorstehenden Betätigungsvorsprung 41 sowie einen ringartigen Flanschvorsprung 40. Der Flanschvorsprung 40 stützt sich an einer Stufe 42 des Kuppelkörperträgers 13 ab, die der Bohrung 37 vorgelagert ist. Dadurch ist der Trägerkörper 36 nicht entlang der Drehachse 32 nach oben hin, das heißt in Richtung des Kuppelkörpers 15 aus dem Tragvorsprung 25 ausziehbar. Mithin stützt sich also die aus dem Kuppelkörper 15 und dem Trägerkörper 36 bestehende Baugruppe entlang der Drehachse 32 axial oben und unten am Kuppelkörperträger 13 ab.

Beim Betrieb der Anhängekupplung 10 verläuft die Drehachse 32 im Wesentlichen vertikal, abgesehen von entsprechenden Schrägstellungen des Zugfahrzeuges 12. Somit kann also der Anhänger 17 bezüglich des Zugfahrzeuges 12 um die Drehachse 32 schwenken.

Da der Trägerkörper 36 drehfest mit dem Kuppelkörper 15 verbunden ist, dieser wiederum zumindest im Wesentlichen drehfest mit der Zugkugelkupplung 16 verbunden ist (wenn diese montiert ist) führt eine Drehbetätigung des Kuppelkörpers 15 zu einer Drehbetätigung des Trägerkörpers 36, so dass dieser beispielsweise mittels eines in der Zeichnung nicht dargestellten Magneten oder eines sonstigen Betätigungsgliedes, beispielsweise eines optischen Gebers oder dergleichen, einen Winkelsensor 43 betätigt. Der Winkelsensor 43 ist in einem Sensormodul 44 angeordnet. Das Sensormodul 44 ist an einer Unterseite des Kuppelkörperträgers 13, nämlich in einer Aufnahme 45 desselben geschützt untergebracht. Die Aufnahme 45 ist durch einen Deckel 46 verschlossen.

Das Sensormodul 44 enthält zweckmäßigerweise neben dem Winkelsensor 43 Schnittstellenmittel zur Ankopplung an ein Bordnetz des Zugfahrzeuges 12, beispielsweise einen schematisch dargestellten Buskoppler 47.

Das Sensormodul 44 ist also geschützt an einer Unterseite des Kuppelkörperträgers 13 positioniert. Die Drehlageranordnung 29 ist ebenfalls geschützt untergebracht, nämlich im Innenraum des Kuppelkörpers 15. Weitere Schutzmaßnahmen können beispielsweise eine Dichtung 49 vorsehen, die an der Unterseite des Umfangsdrehlagers 31 angeordnet und vom Tragvorsprung 25 durchdrungen ist.

Weiterhin ist oberhalb des zweckmäßigerweise als Rollenlager ausgestalteten Stirn-Drehlagers 30 eine Anlaufscheibe 48 vorgesehen.

Die Anhängekupplung 10 kann jedoch nicht nur wie bereits die in DE 10 2008 045 695 A1 beschriebene Anhängekupplung Winkelstellungen des Anhängers 17 bzw. des Kuppelkörpers 15 bezüglich des Kuppelkörperträgers 13 erfassen, sondern auch Stützkräfte und Zug- oder Schub- oder Querkräfte, die entlang der Drehachse 32 und/oder quer dazu auf die Anhängekupplung 10 wirken, wobei hierfür verschiedene einzeln oder in Kombination verwendbare, erfindungsgemäß angeordnete Kraftsensoren nachfolgend vorgestellt werden:
Beispielsweise kann an der Unterseite des Trägerkörpers 36, der bezüglich der Drehachse 32 eine gewisse axiale Verschieblichkeit aufweist, eine Druckmessdose 51 vorgesehen sein, die einen ersten oder mehrere erste Kraftsensoren 50a enthält. Somit kann beispielsweise eine Stützlast 52, die auf den Kuppelkörper 15 entlang der Drehachse 32 wirkt, von der Druckmessdose 51 erfasst werden. Zweckmäßigerweise ist die Druckmessdose 51 mit dem Sensormodul 44 gekoppelt oder bildet einen Bestandteil derselben, so dass der Buskoppler 47 nicht nur die Winkelsignale des Winkelsensors 43, sondern auch das Kraftsignal 53 des Kraftsensors 50a übermitteln kann. Die Druckmessdose 51 ist zweckmäßigerweise in einer Hülse 54 aufgenommen, die zumindest vom Betätigungsvorsprung 41 des Trägerkörpers 36 durchdrungen ist. Jedenfalls wirkt der Betätigungsvorsprung 41 auf den Kraftsensor 50a ein, wenn der Kuppelkörper 15 entlang der Drehachse 32, das heißt vertikal belastet wird.

Alternativ oder in Ergänzung zur Druckmessdose 51 ist als weiterer Kraftsensor 50b ein Ringkraftsensor 55 vorgesehen. Der Ringkraftsensor 55 wird von dem Betätigungsvorsprung 41 durchdrungen. Der Ringkraftsensor 55 kann beispielsweise entlang der Drehachse 32 wirksame bzw. in vertikaler Richtung wirksame Kraftkomponenten, die vom Kuppelkörper 15 einwirken, messen. Somit realisiert der Kraftsensor 50b also die Funktion eines Stützkraftsensors. Es ist aber auch denkbar, dass der Ringkraftsensor 55 quer zur Drehachse 32 oder Vertikalachse wirkende Kräfte misst, beispielsweise eine durch einen Pfeil 56 angedeutete Zuglast oder in Gegenrichtung zum Pfeil 56 eine beim Auflaufen des Anhängers 17 auf das Zugfahrzeug 12 auftretende "Schublast". Dazu hat der Trägerkörper 36 beispielsweise in der Bohrung 37 so viel Spiel, dass der beispielsweise um seine Längsmitte schwenkbar ist, das heißt um einen Bereich oberhalb des Flanschvorsprungs 40, so dass der Betätigungsvorsprung 41 quer zur Drehachse 32 oder Vertikalachse im Innenraum des Ringkraftsensors 55 auslenkbar ist.

Weiterhin ist es möglich, dass der Trägerkörper 36 selbst als Kraftsensor wirkt oder Kraftsensoren aufweist. So können beispielsweise magnetoresistive Sensoren oder Dehnungsmessstreifen am Trägerkörper 36 vorgesehen sein, so dass ein Kraftsensor 50c oder mehrere solcher Kraftsensoren vorgesehen sind.

Aber auch im Bereich der Drehlageranordnung 29 können Kraftsensoren vorgesehen sein. So kann beispielsweise das Umfangsdrehlager 31 einen integrierten Kraftsensor 50d enthalten, der eine axiale oder radiale Verschiebung oder Belastung des Außenrings 34 relativ zum Innenring 33 misst. Ferner können auch beispielsweise am Außenumfang 28 des Tragvorsprungs 25, der insoweit eine Drehlageraufnahme 57 darstellt, einer oder mehrere Kraftsensoren 50e angeordnet sein. Der Kraftsensor 50e kann beispielsweise eine vertikale oder horizontale Belastung der Drehlageraufnahme 57 durch das Umfangsdrehlager 31 messen, die wiederum durch eine Belastung des Kuppelkörpers 15 ausgelöst wird.

Es versteht sich, dass auch unmittelbar im Bereich der Stirnseite 27 des Kuppelkörperträgers 13 Kraftsensoren vorgesehen sein können, beispielsweise an der Stirnseite 27 angeordneter oder als Bestandteil des Stirn-Drehlagers 30 ausgestalteter Kraftsensor 50f.

## Patentansprüche

1. Anhängekupplung für ein Zugfahrzeug (12), insbesondere ein Personen-Kraftfahrzeug, zum Anhängen eines Anhängers an das. Zugfahrzeug (12), mit einem insbesondere außenseitig kugelförmigen Kuppelkörper (15), auf den eine Kupplungsaufnahme einer Anhänger-Kupplung des Anhängers aufsetzbar ist, wobei der Kuppelkörper (15) an einem freien Ende eines an dem Zugfahrzeug (12) befestigbaren Kuppelkörperträgers (13) angeordnet ist, wobei der Kuppelkörper (15) relativ zu dem Kuppelkörperträger (13) beweglich gelagert und/oder elastisch gehaltert ist, und wobei zwischen dem Kuppel-körperträger (13) und dem Kuppelkörper ' (15) mindestens ein Kraftsensor (50a-50f) zur Messung einer auf den Kuppelkörper (15) wirkenden Kraft angeordnet ist, **dadurch gekennzeichnet, dass** sie mindestens einen Winkelsensor (43) zur Erfassung einer Winkelstellung der Kupplungsaufnahme relativ zu dem Kuppelkörperträger (13) aufweist.

2. Anhängekupplung nach Anspruch 1, **dadurch gekennzeichnet, dass** der kuppelkörperträger (13) als ein Kupplungsarm ausgestaltet ist.

3. Anhängekupplung nach Anspruch 1 oder 2, **dadurch gekennzeichnet, dass** der Kuppelkörper (15) an dem Kuppelkörperträger (13) mittels mindestens eines Drehlagers (30, 31) drehbar und/oder mittels eines Schiebelagers verschieblich gelagert ist.

4. Anhängekupplung nach Anspruch 3, **dadurch gekennzeichnet, dass** der Kuppelkörperträger (13) einen Tragvorsprung (25) zum Tragen des Kuppelkörpers (15) aufweist, und dass das mindestens eine Drehlager (30, 31) an einer Innenseite einer Aufnahme (26) des Kuppelkörpers (15) zwischen einem Außenumfang oder einer Stirnseite des Tragvorsprungs (25) angeordnet ist.

5. Anhängekupplung nach Anspruch 3 oder 4, **dadurch gekennzeichnet, dass** das mindestens eine Drehlager (30, 31) den mindestens einen Kraftsensor (50a-50f) aufweist und/oder der mindestens eine Kraftsensor (50a-50f) an einer Drehlageraufnahme (57) für das mindestens eine Drehlager (30, 31) angeordnet ist.

6. Anhängekupplung nach einem der Ansprüche 3 bis 6, **dadurch gekennzeichnet, dass** das mindestens eine Drehlager ein Wälzlager, insbesondere ein Kugellager, ein Rollenlager oder ein Nadellager, oder ein Gleitlager umfasst.

7. Anhängekupplung nach einem der vorhergehenden Ansprüche, **dadurch gekennzeichnet, dass** der mindestens eine Kraftsensor (50a-50f) und der mindestens eine Winkelsensor (43) Bestandteile eines Sensormoduls (44) sind.

8. Anhängekupplung nach einem der vorhergehenden Ansprüche, **dadurch gekennzeichnet, dass** der Kuppelkörper (15) an einem bezüglich des Kuppelkörperträgers (13) zumindest abschnittweise biegbaren und/oder beweglichen, insbesondere beweglich gelagerten und/oder stabförmigen, Trägerkörper (36) gehalten ist, und dass der mindestens eine Kraftsensor (50a-50f) an öder in dem Trägerkörper (36) angeordnet ist.

9. Anhängekupplung nach Anspruch 8, **dadurch gekennzeichnet, dass** sich der Trägerkörper (36) auf dem mindestens einen Kraftsensor (50a-50f) abstützt.

10. Anhängekupplung nach Anspruch 8 oder 9, **dadurch gekennzeichnet, dass** der Trägerkörper (36) bezüglich des Kuppelkörperträgers (13) drehbar gelagert und mit dem Kuppelkörper (15) drehfest verbunden ist, und dass der Trägerkörper (36) eine Winkelstellung des Kuppelkörpers (15) relativ zu dem Kuppelkörperträger (13) auf den Winkelsensor (43) überträgt.

11. Anhängekupplung nach einem der vorhergehenden Ansprüche, **dadurch gekennzeichnet, dass** der mindestens eine Kraftsensor (50a-50f) in einem Innenraum des Kuppelkörpers (15) und/oder des Kuppelkörperträgers (13) angeordnet ist.

12. Anhängekupplung nach einem der vorhergehenden Ansprüche, **dadurch gekennzeichnet, dass** der mindestens eine Kraftsensor (50a-50f) eine ringförmige Gestalt aufweist oder ein Bestandteil einer ringförmigen Kraftsensoranordnung ist, wobei ein den Kuppelkörper (15) tragendes Bauteil in einem Innenraum des Kraftsensors (50a-50f) oder der Kraftsensoranordnung angeordnet ist.

13. Anhängekupplung nach einem der vorhergehenden Ansprüche, **dadurch gekennzeichnet, dass** der mindestens eine Kraftsensor (50a-50f) zu einer Stützlastmessung und/oder einer Zugkraftmessung ausgestaltet ist.

## Claims

1. Trailer coupling for a towing vehicle (12), in particular a car, for attaching a trailer to the towing vehicle (12), with a coupling body (15), in particular spherical on the outside and on which a coupling seating of a trailer coupling of the trailer may be fitted, wherein the coupling body (15) is mounted at a free end of a coupling body support (13) which may be fastened to the towing vehicle (12), wherein the coupling body (15) is movably mounted and/or elastically held relative to the coupling body support (13), and wherein there is provided between the coupling body support (13) and the coupling body (15) at least one force sensor (50a-50f) for measuring a force acting on the coupling body (15), **characterised in that** it has at least one angle sensor (43) to detect an angular position of the coupling seating relative to the coupling body support (13).

2. Trailer coupling according to claim 1, **characterised in that** the coupling body support (13) is in the form of a coupling arm

3. Trailer coupling according to claim 1 or 2, **characterised in that** the coupling body (15) is mounted on the coupling body support (13) so as to be rotatable by means of at least one rotary bearing (30, 31) and/or movable by means of a sliding bearing.

4. Trailer coupling according to claim 3, **characterised in that** the coupling body support (13) has a support projection (25) to support the coupling body (15), and that the rotary bearing or bearings (30, 31) is or are located on an inner side of the seating (26) of the coupling body (15) between an outer periphery or an end face of the support projection (25).

5. Trailer coupling according to claim 3 or 4, **characterised in that** the rotary bearing or bearings (30, 31) has or have the force sensor or sensors (50a-50f) and/or the force sensor or sensors (50a-50f) are provided on a rotary bearing seating (57) for the rotary bearing or bearings (30, 31).

6. Trailer coupling according to any of claims 3 to 6, **characterised in that** the rotary bearing or bearings comprise(s) an anti-friction bearing, in particular a ball bearing, a roller bearing or a needle bearing, or a sliding bearing.

7. Trailer coupling according to any of the preceding claims, **characterised in that** the force sensor or sensors (50a-50f) and the angle sensor or sensors (43) are component parts of a sensor module (44).

8. Trailer coupling according to any of the preceding claims, **characterised in that** the coupling body (15) is held on a support body (36), at least in part flexible and/or movable relative to the coupling body support (13), in particular movably mounted and/or rod-like, and that the force sensor or sensors (50a-50f) is or are located in the support body (36).

9. Trailer coupling according to claim 8, **characterised in that** the support body (36) rests on the force sensor or sensors (50a-50f).

10. Trailer coupling according to claim 8 or 9, **characterised in that** the support body (36) is rotatably mounted relative to the coupling body support (13) and non-rotatably connected to the coupling body (15), and that the support body (36) transmits to the angle sensor (43) an angular position of the coupling body (15) relative to the coupling body support (13).

11. Trailer coupling according to any of the preceding claims, **characterised in that** the force sensor or sensors (50a-50f) is or are located in an internal space of the coupling body (15) and/or of the coupling body support (13).

12. Trailer coupling according to any of the preceding claims, **characterised in that** the force sensor or sensors (50a-50f) has or have an annular shape or form a component part of an annular force sensor assembly, wherein a part supporting the coupling body (15) is located in an internal space of the force sensor (50a-50f) or the force sensor assembly.

13. Trailer coupling according to any of the preceding claims, **characterised in that** the force sensor or sensors (50a-50f) is or are designed for a support load measurement and/or a tensile force measurement.

## Revendications

1. Attelage pour un véhicule tracteur (12), en particulier un véhicule automobile personnel, pour l'attelage d'une remorque au véhicule tracteur (12), avec un corps de couplage (15) sphérique côté extérieur en particulier, sur lequel un logement d'un attelage de la remorque peut être placé, le corps de couplage (15) étant disposé sur une extrémité libre d'un support de corps de couplage (13) pouvant être fixé sur le véhicule tracteur (12), le corps de couplage (15) étant logé de manière mobile et/ou supporté de manière élastique par rapport au support de corps de couplage (13) et au moins un capteur de force (50a-50f) étant disposé pour la mesure d'une force agissant sur le corps de couplage (15) entre le support de corps de couplage (13) et le corps de couplage (15), **caractérisé en ce qu'**il présente au moins un capteur d'angle (43) pour la détection d'une position angulaire du logement d'attelage par rapport au support de corps de couplage (13).

2. Attelage selon la revendication 1, **caractérisé en ce que** le support de corps de couplage (13) est configuré comme un bras d'attelage.

3. Attelage selon la revendication 1 ou 2, **caractérisé en ce que** le corps de couplage (15) est logé de manière rotative sur le support de corps de couplage (13) à l'aide d'au moins un palier rotatif (30, 31) et/ou de manière mobile à l'aide d'un palier coulissant.

4. Attelage selon la revendication 3, **caractérisé en ce que** le support de corps de couplage (13) présente une saillie porteuse (25) pour le support du corps de couplage (15) et **en ce que** l'au moins un palier rotatif (30, 31) est disposé sur un côté intérieur d'un logement (26) du corps de couplage (15) entre une périphérie extérieure ou un côté frontal de la saillie porteuse (25).

5. Attelage selon la revendication 3 ou 4, **caractérisé en ce que** l'au moins un palier rotatif (30, 31) présente l'au moins un capteur de force (50a-50f) et/ou l'au moins un capteur de force (50a-50f) est disposé sur un logement de palier rotatif (57) pour l'au moins un palier rotatif (30, 31).

6. Attelage selon l'une quelconque des revendications 3 à 6, **caractérisé en ce que** l'au moins un palier rotatif comporte un palier à roulement, en particulier un roulement à billes, un palier à rouleaux ou un roulement à aiguilles ou un palier à glissement.

7. Attelage selon l'une quelconque des revendications précédentes, **caractérisé en ce que** l'au moins un capteur de force (50a-50f) et l'au moins un capteur d'angle (43) sont des constituants d'un module de capteur (44).

8. Attelage selon l'une quelconque des revendications précédentes, **caractérisé en ce que** le corps de couplage (15) est maintenu sur un corps porteur (36) au moins par sections pliable et/ou mobile, en forme de barre et/ou logé de manière flexible en particulier, et **en ce que** l'au moins un capteur de force (50a-50f) est disposé sur ou dans le corps porteur (36).

9. Attelage selon la revendication 8, **caractérisé en ce que** le corps porteur (36) s'appuie sur l'au moins un capteur de force (50a-50f).

10. Attelage selon la revendication 8 ou 9, **caractérisé en ce que** le corps porteur (36) est logé de manière rotative par rapport au support de corps de couplage (13) et est relié de manière solidaire en rotation au corps de couplage (15) et **en ce que** le corps porteur (36) transmet une position angulaire du corps de couplage (15) par rapport au support de corps de couplage (13) au capteur d'angle (43).

11. Attelage selon l'une quelconque des revendications précédentes, **caractérisé en ce que** l'au moins un capteur de force (50a-50f) est disposé dans un espace intérieur du corps de couplage (15) et/ou du support de corps de couplage (13).

12. Attelage selon l'une quelconque des revendications précédentes, **caractérisé en ce que** l'au moins un capteur de force (50a-50f) présente une forme annulaire ou est un constituant d'un ensemble de capteur de force annulaire, un composant portant le corps de couplage (15) étant disposé dans un espace intérieur du capteur de force (50a-50f) ou de l'ensemble de capteur de force.

13. Attelage selon l'une quelconque des revendications précédentes, **caractérisé en ce que** l'au moins un capteur de force (50a-50f) est configuré pour une mesure de charge d'appui et/ou une mesure de force de traction.
